# DEMANDE DE BREVET EUROPEEN

(11) **EP 3 599 404 A1**
(43) Date de publication de la demande: **29.01.2020**
(21) Numéro de dépôt: 19184077.6
(22) Date de dépôt: 03.07.2019
(51) Int. Cl.: F16L 3/12, F16L 3/16, F16L 3/123, F16L 3/137, F16B 2/08, F02M 35/10, F16L 3/18, F16L 3/20, F16L 3/10

(54) **SUPPORT DE FIXATION AJUSTABLE POUR LE MONTAGE D'UN ARTICLE TUBULAIRE SUR UN ORGANE EXTERNE**

(30) Priorité: 25.07.2018 FR 1870865
(71) Demandeur: Avon Polymeres France, 56000 Vannes (FR)
(72) Inventeur: ROBINAULT, Michel, 56860 Sene (FR); GATEAU, David, 56390 Locmaria Grand Champ (FR); LESAGE, Dane, 56400 Le Bono (FR)

(57) **Abrégé**

Le support de fixation (12) comprend un corps annulaire (20) de forme générale en « C » comprenant deux extrémités libres (22A, 22B) pouvant être écartées pour positionner le corps annulaire (20) autour de l'article (14) et une patte (14) de fixation à un point de montage (16) d'un organe externe (18). En outre, conformément à l'invention, le corps annulaire (20) comprend sur une face interne une pluralité de crans (50) de retenue propres à coopérer avec l'article tubulaire (14) de sorte que le corps annulaire (20) soit adapté pour effectuer une rotation incrémentale d'un cran (50) à l'autre sous l'effet d'une sollicitation mécanique en rotation, entre des première et deuxième positions angulaires provisoires d'immobilisation par les crans de retenue (50).

## Description

### Domaine technique.

La présente invention concerne un support de fixation ajustable pour le montage d'un article tubulaire sur un organe externe. L'invention s'applique plus particulièrement mais non exclusivement à la fixation d'un article tubulaire tel que par exemple un conduit de transfert de fluide sur un organe externe, par exemple un bloc moteur, un châssis d'un véhicule automobile ou tout autre organe associé au bloc moteur (par exemple alternateur).

Dans le cas particulier d'un conduit d'admission d'air, le conduit est généralement intégré dans un circuit d'admission d'air pouvant comporter d'autres conduits d'admission d'air reliés ensemble en série et d'autres composants tels que notamment un turbo, un boîtier papillon, un ou plusieurs échangeurs thermiques. En plus de cet assemblage au circuit, au moins un des conduits d'admission d'air est fixé solidement en un ou plusieurs points de montage d'un organe externe tel que le bloc moteur, le châssis du véhicule automobile, ou tout autre organe associé au bloc moteur (par exemple alternateur).

Cette fixation additionnelle permet notamment de contenir le trajet du circuit d'admission d'air à l'intérieur d'un espace désiré afin d'en limiter l'encombrement sans risque de contact avec d'autres organes du véhicule automobile lors des débattements entre le moteur et le châssis.

Chaque fixation additionnelle est généralement réalisée par un dispositif de montage désigné couramment par support de fixation ou plus connue également sous la terminologie anglo-saxonne « mounting bracket ».

On connaît déjà, un tel dispositif de montage qui se compose d'un corps annulaire configuré pour entourer l'article tubulaire et d'une patte de fixation agencée pour être fixée en un point de montage à l'organe externe tel que le châssis du véhicule automobile.

Du fait des tolérances dimensionnelles des différents composants moteur, il s'avère que la fixation des conduits par l'intermédiaire de pattes de fixation peut être une opération particulièrement difficile à réaliser pour le monteur sur chaîne d'assemblage automobile si les pattes de fixation sont liées de façon rigide au conduit, ou au contraire, sont trop libres en rotation et/ou translation par rapport au conduit.

### Technique antérieure.

Les conduits d'admission d'air réalisés en thermoplastique par extrusion-soufflage comportent généralement une ou plusieurs pattes de fixation rapportées directement sur le conduit d'admission par une opération de soudage de type miroir par plaque chauffante ou de type vibratoire par friction. Eventuellement, la patte de fixation peut être rapportée également par surmoulage ou par injection directe sur la tubulure soufflée formant le conduit d'admission.

Il existe également des conduits d'admission d'air réalisés en thermoplastique par injection. De même que pour les conduits réalisés par extrusion-soufflage, les conduits d'admission d'air réalisés par injection peuvent comporter une ou plusieurs pattes de fixation intégrées lors de l'injection de la tubulure.

L'inconvénient d'un tel montage est que du fait que les pattes de fixation sont assemblées de façon rigide sur le conduit, que ce soit à l'issue d'une opération de soudage ou d'une opération de surmoulage ou d'injection, il est nécessaire de prévoir une architecture du conduit respectant la forme de l'organe externe en tenant compte des dispersions mécaniques, des contraintes fonctionnelles, des rattrapages de jeux et dilations en fonctionnement.

En particulier, le plus souvent, ces conduits doivent comporter des manchons souples à leurs extrémités pour faciliter l'assemblage sur moteur et absorber les variations dimensionnelles. Mais ces manchons ajoutent de la complexité à la fabrication des conduits et présentent des risques de fuite dans leur zone de raccordement avec le conduit rigide.

Afin de remédier à ces inconvénients, il est connu de l'état de la technique, notamment de la demande de brevet EP 3 029 364 A1, un support de fixation ajustable pour le montage d'un conduit d'air sur un organe externe. Dans ce document, le dispositif de montage comprend un anneau de serrage pourvu de deux extrémités libres qui peuvent être écartées l'une de l'autre pour permettre le positionnement du corps annulaire autour du conduit d'air et de moyens d'encliquetage permettant de fermer le corps annulaire dans une configuration lâche provisoire autorisant une libre rotation du corps annulaire autour de l'article tubulaire, avant sa fixation sur l'organe moteur.

Toutefois, le déplacement libre du corps autour de l'article tubulaire provoque un risque d'usure et de glissement pouvant provoquer à termes une dégradation du conduit d'admission d'air avec tous les risques inhérents à l'apparition de tels dommages. Par ailleurs, le glissement du corps de fixation autour de l'article peut conduire à un relâchement progressif du serrage du corps autour de l'article en cours de fonctionnement, voire même à la désolidarisation du support et de l'article.

### Résumé de l'invention

A cet effet, l'invention a pour objet un support de fixation d'un article tubulaire à un point de montage d'un organe externe, du type comprenant :
- un corps annulaire de forme générale en « C » comprenant deux extrémités libres pouvant être écartées pour positionner le corps annulaire autour de l'article, le corps comprenant sur une face interne une pluralité de crans de retenue propres à coopérer avec l'article tubulaire de sorte que le corps annulaire soit adapté pour effectuer une rotation incrémentale d'un cran à l'autre sous l'effet d'une sollicitation mécanique en rotation, entre des première et deuxième positions angulaires provisoires d'immobilisation par les crans de retenue, et
- une patte de fixation au point de montage,
**caractérisé en ce que** le support comprend un moyen de limitation du déplacement en rotation relativement à l'articule tubulaire selon une direction circonférentielle à l'intérieur d'une plage de rotation prédéfinie du support autour de l'article, le moyen de limitation comprend un doigt s'étendant selon une direction longitudinale à partir du corps annulaire et est configuré pour coopérer entre deux butées ménagées sur l'article tubulaire et espacées angulairement pour définir la plage de rotation prédéfinie **et en ce que** la pluralité de crans s'étend longitudinalement sur au moins une face interne du doigt.

Grâce à l'invention, la présence de la pluralité de crans permet d'éviter un glissement intempestif pendant le montage de l'ensemble comprenant l'article et le support sur l'organe externe mais également au cours du fonctionnement tout en préservant la possibilité de mobilité relative de l'article et du support par incréments d'angles successifs. Les éléments géométriques formant les crans permettant d'immobiliser l'article et le support.

Un support de fixation selon l'invention peut comprendre l'une ou plusieurs des caractéristiques suivantes.

Selon un mode de réalisation préféré de l'invention, la pluralité de crans s'étend longitudinalement dans une région de la face interne du corps annulaire en forme d'une bande qui s'étend longitudinalement selon la direction axiale.

Selon un mode de réalisation préféré de l'invention, le support comprend en outre un moyen pour limiter le déplacement en rotation et/ou en translation du support relativement à l'article tubulaire, respectivement selon une direction circonférentielle à l'intérieur d'une plage de rotation prédéfinie du support autour de l'article et/ou selon une direction axiale de l'article à l'intérieur d'une plage de translation prédéfinie du support le long de l'article.

Selon un mode de réalisation préféré de l'invention, le moyen de limitation en rotation comprend un doigt s'étendant selon une direction longitudinale à partir du corps annulaire et est configuré pour coopérer entre deux butées ménagées sur l'article tubulaire et espacées angulairement pour définir la plage de rotation prédéfinie.

Selon un mode de réalisation préféré de l'invention, la pluralité de crans s'étend longitudinalement sur au moins une face interne du doigt.

Selon un mode de réalisation préféré de l'invention, la pluralité de crans se prolongent longitudinalement sur la face interne du corps annulaire depuis l'extrémité du doigt jusqu'au bord annulaire opposé.

Selon un mode de réalisation préféré de l'invention, le moyen de limitation en rotation et le moyen de limitation du déplacement axial comprennent une lumière ménagée sur le corps annulaire s'étendant selon une direction circonférentielle, configurée pour coopérer avec une nervure saillante de l'article tubulaire.

Selon un mode de réalisation préféré de l'invention, le corps annulaire est élastiquement déformable pour permettre l'écartement des deux extrémités libres l'une de l'autre.

Selon un mode de réalisation préféré de l'invention, le corps annulaire comprend à ses extrémités libres des premier et deuxième prolongements qui s'étendent à partir du corps annulaire selon une direction latérale extérieure et sont configurés pour former ensemble la patte de fixation par superposition l'un sur l'autre.

Selon un mode de réalisation préféré de l'invention, le support comprend des organes de liaison complémentaires de pré-maintien qui sont prévus sur chacun desdits prolongements et sont configurés pour, qu'à l'état lié, les prolongements soient reliés ensemble selon une configuration lâche autorisant la rotation incrémentale du corps annulaire autour de l'article tubulaire.

Selon un autre mode de réalisation préféré de l'invention, les prolongements comprennent chacun un trou, les trous étant destinés à venir en vis-à-vis pour former un passage traversant dans la patte de fixation pour la réception d'un élément de serrage des deux prolongements sur l'organe externe de telle sorte que le serrage de l'élément provoque le rapprochement mutuel des deux prolongements de la configuration lâche provisoire à une configuration serrée définitive, empêchant tout déplacement relatif de l'article et du corps annulaire.

Selon un autre mode de réalisation préféré de l'invention, les organes de pré-maintien sont ménagés en retrait d'un bord d'une face interne respectivement des premier et deuxième prolongements.

L'invention peut comprendre encore un ensemble de fixation comprenant un support de fixation selon l'invention et un article tubulaire, caractérisé en ce que l'article tubulaire comprend un moyen complémentaire de limitation en rotation du support de fixation.

Un ensemble selon l'invention peut en outre comporter l'une ou l'autre des caractéristiques suivantes.

Selon un mode de réalisation préféré de l'invention, l'article tubulaire comprend un moyen complémentaire de limitation en déplacement longitudinal du support le long de l'article.

Selon un mode de réalisation préféré de l'invention, l'article tubulaire comprend au moins une première nervure annulaire faisant saillie radialement vers l'extérieur pour limiter la translation longitudinale, et comprend de préférence au moins une deuxième nervure annulaire, le support de fixation étant destiné à être guidé en translation entre ces deux nervures.

Selon un autre mode de réalisation préféré de l'invention, le support de fixation étant selon l'invention, la première nervure annulaire est interrompue sur un secteur angulaire qui définit la plage de rotation prédéfinie à l'intérieur de laquelle le doigt est déplacé.

### Brève description des dessins

D'autres caractéristiques et avantages de l'invention apparaîtront à la lumière de la description qui suit, faite en référence aux dessins annexes dans lesquels :
**Fig.1** est une vue en perspective d'un ensemble selon un premier mode de réalisation de l'invention comprenant un support de fixation et un article tubulaire monté sur un organe externe ;
**Fig.2** est une vue en perspective du support de fixation représenté sur la figure 1 ;
**Fig.3** est une vue en coupe détaillée d'un mécanisme de crantage de retenue du support de fixation et de l'article tubulaire de l'ensemble de la figure 1 ;
**Fig.4** est une vue partielle en perspective de l'ensemble de la figure 1 représentant en détail des moyens d'encliquetage du support de fixation ;
**Fig.5** est une vue en coupe des moyens d'encliquetage dans une configuration lâche ;
**Fig.6** est une vue en coupe des moyens d'encliquetage dans une configuration serrée ;
**Fig.7** illustre une première étape de montage de l'ensemble de la figure 1 ;
**Fig.8** illustre une deuxième étape de montage de l'ensemble de la figure 1 ;
**Fig.9** illustre la deuxième étape de montage selon un point de vue différent de celui de la figure 8 ;
**Fig.10** illustre une troisième étape de montage de l'ensemble de la figure 1 ;
**Fig.11** est une vue en perspective d'un ensemble comprenant un article tubulaire et un support de fixation selon un deuxième mode de réalisation de l'invention ;

### Description des modes de réalisation

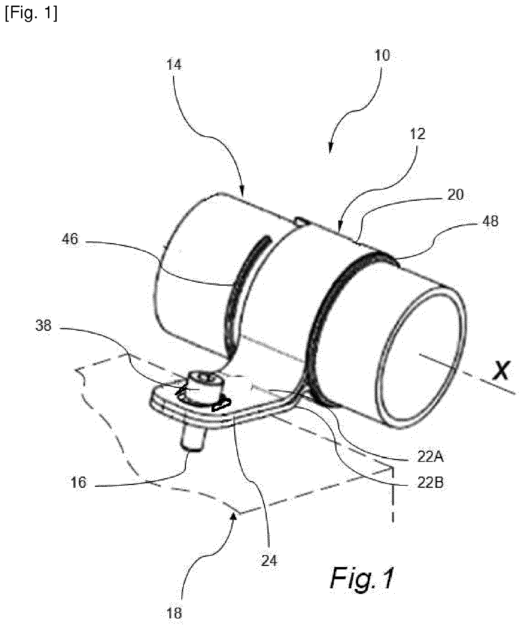

On a représenté sur **la** **figure 1** un ensemble de fixation selon un premier mode de réalisation. Cet ensemble est désigné par la référence générale 10. L'ensemble 10 comprend un support de fixation 12 et un article tubulaire 14.

Dans l'exemple illustré sur **la** **figure 1****,** le support 12 est destiné à fixer l'article tubulaire 14 à un point de montage 16 d'un organe externe 18. Plus spécifiquement dans l'exemple décrit, l'article tubulaire 14 est un conduit d'admission d'air d'un circuit d'admission d'un véhicule automobile. L'article tubulaire 14, ci-après désigné dans cet exemple par conduit 14, a une forme générale tubulaire autour d'un axe longitudinal X (**figure 1**). Par exemple, l'organe externe 18 est un bloc moteur, ou un châssis du véhicule automobile, ou tout autre organe associé au moteur.

Le conduit d'admission d'air 14 est de préférence réalisé en matériau polymère, de préférence rigide, et par exemple en polymère thermoplastique tel que : polyamide (PA), polytéréphtalate de butylène (PBT), co-polymère de polyester thermoplastique et élastomère (TPC-ET), Polypropylène (PP), copolymère polypropylène et éthylène-propylène-diène-monomère (PP-EPDM), polyphtalamide (PPA), poly-sulfure de phénylène (PPS).

De façon optionnelle, ledit polymère thermoplastique peut être chargé de fibres de renfort, notamment de fibres de verre.

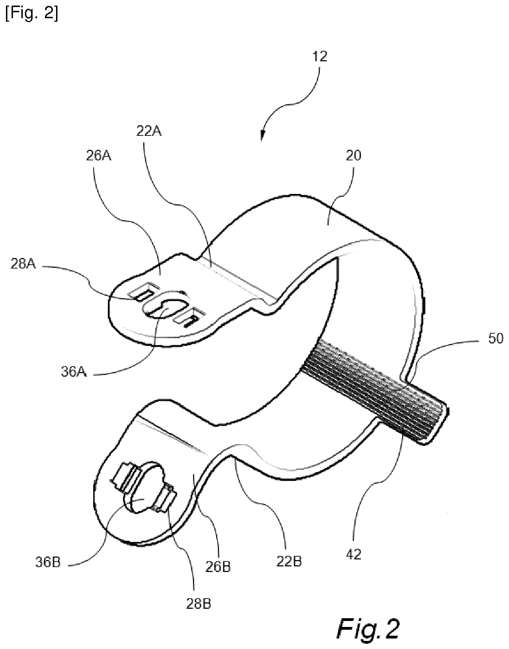

Comme cela est illustré en détail sur **la** **figure 2****,** le support de fixation 12 comprend un corps annulaire 20 en forme générale en « C » destiné à recevoir et à tenir le conduit 14. Ce corps annulaire 20 comprend deux extrémités libres 22A et 22B pouvant être écartées pour positionner le corps annulaire 20 autour de l'article 14.

De préférence, dans ce premier mode de réalisation, le corps annulaire 20 est élastiquement déformable pour permettre l'écartement des deux extrémités libres 22A, 22B l'une de l'autre. Par exemple, le support de fixation 12 est de préférence préformé en un anneau ouvert avec une forme générale de « C », de forme sensiblement conjuguée à la forme de l'article tubulaire 14.

Le support de fixation 12 est réalisé de préférence dans un matériau polymère thermoplastique, de préférence non chargé de fibres de verre, tel que polyamide (PA), polytéréphtalate de butylène (PBT), co-polymère de polyester thermoplastique et élastomère (TPC-ET), Polypropylène (PP), copolymère polypropylène et éthylène-propylène-diène-monomère (PP-EPDM), polyphtalamide (PPA), poly-sulfure de phénylène (PPS). Ledit polymère thermoplastique peut également, de façon optionnelle, être chargé de fibres de renfort, notamment de fibres de verre. Un tel matériau polymère permet avantageusement de fabriquer facilement un support de fixation léger et bon marché, de préférence par moulage par injection. Eventuellement, en variante, le support de fixation 12 est réalisé dans un autre matériau thermoplastique, thermoplastique élastomère, voire thermodurcissable ou même dans une matière métallique.

Le support de fixation 12 comprend encore une patte 24 de fixation du support 12 au point de montage 16 de l'organe externe 18. Cette patte de fixation 24 s'étend dans cet exemple à partir du corps annulaire 20 selon une direction externe latérale.

A cet effet, dans l'exemple illustré, le corps annulaire 20 comprend à ses extrémités libres 22A et 22B des premier 26A et deuxième 26B prolongements qui s'étendent à partir du corps annulaire 20 en direction latérale extérieure et sont configurés pour former ensemble la patte de fixation 24 par rapprochement mutuel l'un de l'autre.

En outre, afin de solidariser les deux prolongements 26A, 26B entre eux et former ainsi une patte de fixation 24 d'une seule pièce, le support 12 comprend des organes 28A, 28B de liaison complémentaires de pré-maintien qui sont prévus sur chacun desdits prolongements 26A, 26B et sont aptes à coopérer ensemble pour fermer le support 12 autour de l'article 14.

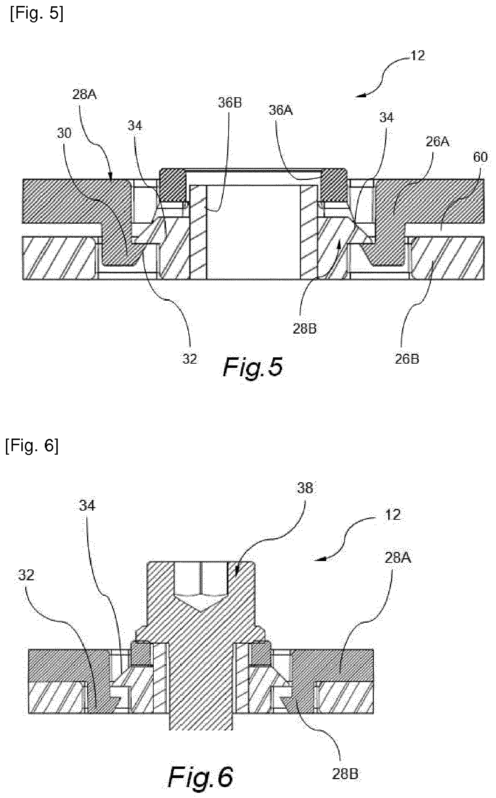

De préférence, ces premier 28A et deuxième 28B organes de pré-maintien sont configurés pour, qu'à l'état lié, les prolongements 26A, 26B formant la patte de fixation 24 soient reliés ensemble selon une configuration lâche autorisant un déplacement limité du corps annulaire 20 relativement à l'article tubulaire 14. Dans cette configuration lâche, les deux prolongements 26A, 26B ne sont pas serrés l'un contre l'autre mais présentent un jeu intercalaire 60 autorisant un déplacement limité des deux prolongements 26A, 26B l'un par rapport à l'autre. Ceci est visible en détail sur **la** **figure 5****.**

De préférence, la configuration lâche autorise aussi bien un ajustement libre en rotation (azimutale) du support 12 autour de l'article 14 qu'un ajustement libre en translation axiale du support 12 le long de l'article 14. Cette configuration de fixation provisoire permet ainsi une relative liberté de déplacement du support de fixation 12 par rapport à l'article 14 alors même que les organes de pré-maintien 28 sont engagés l'un avec l'autre.

Dans l'exemple illustré, les organes complémentaires de pré-maintien comprennent des moyens 28 d'encliquetage qui sont prévus sur chacun desdits prolongements 26A, 26B. Ainsi, le premier prolongement 26A comprend un premier moyen d'encliquetage 28A et le deuxième prolongement 26B comprend un deuxième moyen d'encliquetage 28B complémentaire venant coopérer avec le premier moyen 28A. Comme cela est visible sur **la** **figure 2****,** les premier et deuxième moyens d'encliquetage 28A, 28B sont disposés respectivement sur des faces internes en regard l'une de l'autre desdits prolongements 26A, 26B.

Comme cela est illustré en **figure 5****,** le premier moyen d'encliquetage 28A comprend par exemple au moins un ergot d'encliquetage 30 et le deuxième moyen d'encliquetage comprend au moins un orifice 32 correspondant percé dans le prolongement 28B pourvu d'un bec d'encliquetage 34 faisant saillie à l'intérieur de l'orifice 32. Lors de son insertion dans l'orifice 32, l'ergot d'encliquetage 30 coopère avec le bec d'encliquetage 34 par déformation élastique pour permettre le franchissement du bec 34 en saillie et le passage de l'ergot 30 à l'intérieur de l'orifice 32 pour obtenir un encliquetage en force. De préférence, le premier moyen d'encliquetage 28A comprend une paire d'ergots d'encliquetage 30 et le deuxième moyen d'encliquetage 28B comprend une paire d'orifices 32 et de becs d'encliquetage 34. En outre, comme cela est visible sur **la** **figure 5****,** les ergots 30 et becs 34 sont pourvus chacun d'un chanfrein de telle façon que les chanfreins s'engagent et coopèrent mutuellement lors de l'opération d'encliquetage.

Dans l'exemple décrit, le support de fixation 12, après avoir été ouvert élastiquement de manière à être engagé autour de l'article tubulaire 10, peut revenir élastiquement à sa forme originelle dans laquelle ledit premier prolongement 26A peut être aisément rapproché dudit deuxième prolongement 26B. Par une simple application de pression des doigts sur les organes de pré-maintien 28, par encliquetage dans l'exemple décrit, les prolongements 26A, 26B peuvent former la patte de fixation 24 puis il est possible d'ajuster librement la position du support 12 par rapport à l'article 14.

Par ailleurs, dans l'exemple décrit, les premier et deuxième prolongements 26A, 26B sont perforés et délimitent chacun un orifice traversant 36A, 36B. Lors du rapprochement mutuel des prolongements 26A, 26B, les orifices 36A, 36B viennent en vis-à-vis l'un de l'autre pour permettre le passage d'un élément de serrage 38 de la patte de fixation 24 au point de montage 16 de l'organe externe 18.

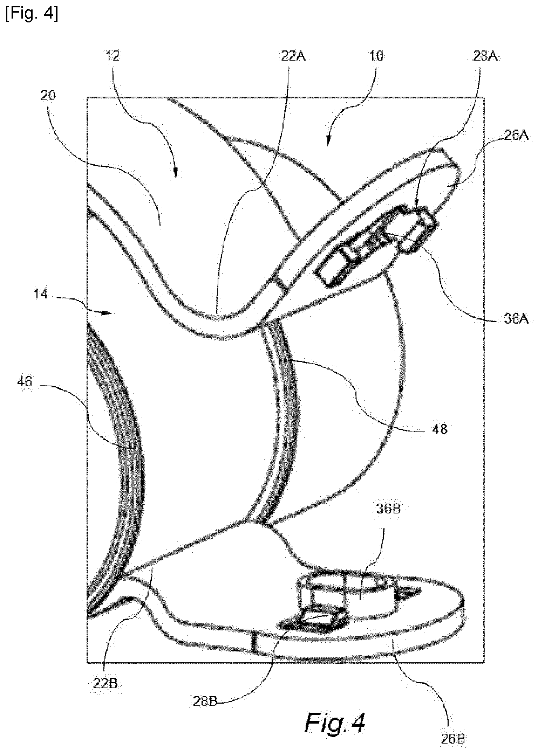

En outre, dans l'exemple illustré, les trous 36A, 36B présentent des bords périphériques conformés pour venir s'encastrer l'un dans l'autre. Par exemple, l'orifice 36B est, comme cela est visible sur **la** **figure 4****,** pourvu d'une douille périphérique venant s'encastrer à l'intérieur de l'orifice 36A. De préférence, cette douille métallique, par exemple en acier, est destinée à éviter un écrasement excessif pouvant provoquer une rupture des prolongements 26A et/ou 26B lors du serrage de la vis 38 ou pouvant provoquer le fluage des prolongements 26A et 26B conduisant alors à un desserrage de la patte de fixation 14.

Lors de la fixation de l'élément de serrage 38 sur l'organe externe 18 au point de montage 16, lesdits prolongements 26A, 26B sont configurés en outre pour être rapprochés mutuellement de la configuration lâche provisoire jusqu'à une configuration serrée définitive empêchant tout déplacement relatif de l'article 14 et du corps annulaire 20 par la fixation de l'élément de serrage 38 au point de montage 16.

Dans l'exemple décrit, le support de fixation 12 comprend en outre un moyen 40 pour limiter le déplacement en rotation relativement à l'article tubulaire 14. De préférence, ce moyen 40 limite la rotation de l'article tubulaire 14 selon une direction circonférentielle à l'intérieur d'une plage de rotation prédéfinie du support 12 par rapport à l'article 14.

Selon ce premier mode de réalisation, le moyen de limitation 40 en rotation comprend un doigt 42 s'étendant selon une direction longitudinale à partir du corps annulaire 20 configuré pour coopérer avec une butée complémentaire ménagée sur l'article tubulaire 14. Dans ce premier mode de réalisation, le conduit d'admission 14 comprend un moyen complémentaire de limitation de la rotation du support de fixation 12.

Par exemple, comme cela est illustré sur **la** **figure 1****,** le moyen complémentaire comprend une première nervure annulaire 46 ménagée sur l'article tubulaire 14 et interrompue sur un secteur angulaire qui définit la plage de rotation prédéfinie à l'intérieur de laquelle le doigt 42 peut être déplacé.

En outre, de préférence, dans ce premier mode de réalisation, le conduit 14 est muni d'un moyen de limitation de la translation du support 12 relativement à l'article tubulaire 14 selon une direction axiale de l'article 14 à l'intérieur d'une plage de translation prédéfinie du support 12 le long de l'article 14.

A cet effet, l'article tubulaire 14 comprend au moins une deuxième nervure annulaire 48 faisant saillie radialement vers l'extérieur pour limiter la translation longitudinale.

Conformément à l'invention, le corps annulaire 20 comprend en outre sur sa face interne une pluralité de crans 50 de retenue propres à coopérer avec l'article tubulaire 14. Ainsi, le corps annulaire 20 est adapté pour effectuer une rotation incrémentale d'un cran à l'autre sous l'effet d'une sollicitation mécanique en rotation, entre des première et deuxième positions angulaires provisoires d'immobilisation par les crans de retenue 50.

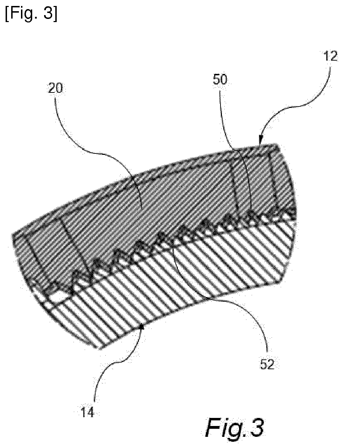

De préférence, dans ce premier mode de réalisation, la pluralité de crans 50 s'étend longitudinalement sur au moins une face interne du doigt 42. En outre, l'article tubulaire 14 est également pourvu d'une pluralité de crans 52 venant en prise avec la pluralité de crans 50 du support de fixation 12 (**figure 3**).

De préférence, la largeur des crans 50 pourra être définie en fonction d'une précision angulaire souhaitée pour la rotation incrémentale. La hauteur des crans 50 pourra être choisie en fonction du pouvoir d'accrochage souhaité.

Comme représenté **en** **figure 3****,** la section d'un cran est de préférence triangulaire, mais tout autre forme de crans est également possible, comme, par exemple, une section de forme sensiblement sinusoïdale.

Les organes de liaison complémentaires de pré-maintien 28A et 28B qui sont prévus sur chacun desdits prolongements 26A, 26B, sont de préférence configurés pour, qu'à l'état lié, les prolongements 26A, 26B soient reliés ensemble selon une configuration lâche autorisant la rotation incrémentale du corps annulaire 20 autour de l'article tubulaire 14.

Bien entendu, dans une variante de l'invention non illustré, le support de fixation peut être dépourvu de moyens de limitation en rotation et donc de doigt. Dans ce cas, la pluralité de crans s'étend à l'intérieur d'une face interne du corps annulaire.

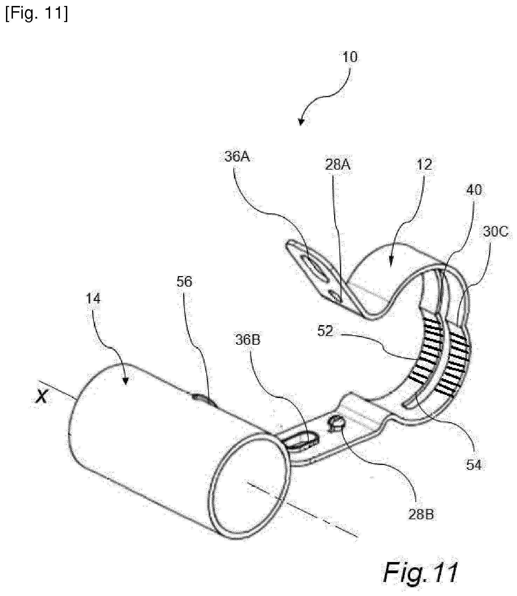

On a représenté sur **la** **figure 11****,** un support de fixation 12 selon un deuxième mode de réalisation. Dans ce deuxième mode de réalisation, les éléments analogues à celui du premier mode de réalisation portent des références identiques.

Dans ce deuxième mode de réalisation, le support de fixation 12 comprend un corps annulaire 20 comprenant deux arceaux reliés ensemble par une zone d'articulation 30C. Cette zone d'articulation forme une charnière ou un pli. Chaque arceau est par ailleurs muni d'un prolongement 26A, 26B pour former ensemble réunis, une patte de fixation 24.

Comme dans le premier mode de réalisation, le support de fixation 12 comprend un corps annulaire 20 en forme générale en « C » destiné à recevoir et à tenir le conduit 14. Ce corps annulaire 20 comprend deux extrémités libres 22A et 22B pouvant être écartées pour positionner le corps annulaire 20 autour de l'article 14 grâce à la charnière ou au pli.

Avant la mise en place sur l'article tubulaire 14, le support de fixation 12 est grand ouvert et les arceaux sont suffisamment éloignés l'un de l'autre pour permettre l'insertion de l'article tubulaire 14 dans le support de fixation 12. Les arceaux et les prolongements 26A, 26B peuvent être alors rapprochés mutuellement pour enfermer le support de fixation 12 autour de l'article tubulaire 14.

Le corps annulaire 20 et plus particulièrement les arceaux et la zone d'articulation 30C sont réalisés préférentiellement d'un seul tenant avec les prolongements 26A, 26B dans un matériau semi-rigide qui est d'une part suffisamment rigide pour permettre un serrage efficace du corps annulaire 20 par constriction sur l'article tubulaire 14 et d'autre part suffisamment flexible pour permettre la flexion élastique nécessaire pour ouvrir le corps annulaire 20 et engager le support de fixation 12 autour de l'article tubulaire 14.

Dans ce mode de réalisation, le corps annulaire 20 portent une pluralité de crans 50 destinés à coopérer avec une succession de crans complémentaires 50 portés par l'article tubulaire 14.

De préférence, dans ce deuxième mode de réalisation, le moyen de limitation en rotation comprend une lumière 54 ménagée sur le corps annulaire s'étendant selon une direction circonférentielle, configurée pour coopérer avec une nervure saillante 26 de l'article tubulaire 14.

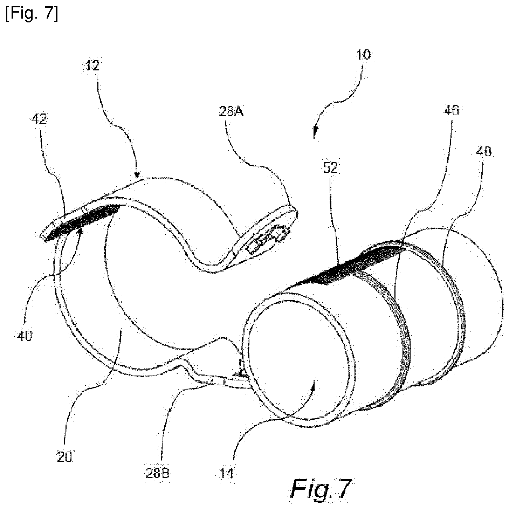

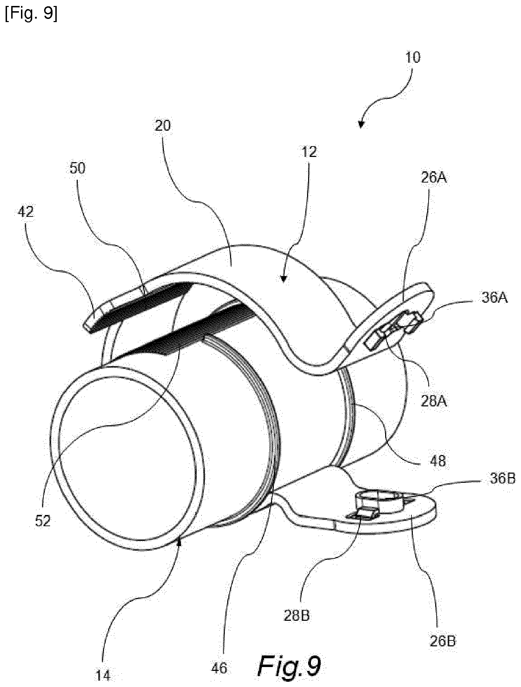

On va maintenant décrire en référence **aux** **figures 7 à 10** les principaux aspects de fonctionnement d'un ensemble de fixation selon le premier mode de réalisation.

Initialement, l'ensemble de fixation 10 est à l'état démonté. L'article tubulaire 14 et le support de fixation 12 sont alors séparés l'un de l'autre comme illustré sur **la** **figure 7****.**

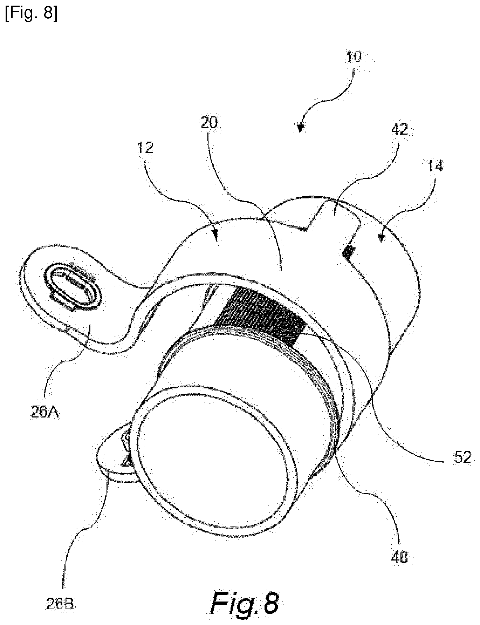

Au cours d'une première étape, le support de fixation 12 est déformé pour écarter les deux prolongements 26A et 26B ce qui permet d'insérer l'article tubulaire 14 à l'intérieur du corps annulaire 20 du support 12. Comme illustré sur **la** **figure 8****,** le support 12 est positionné autour de l'article tubulaire 14 dans l'espace annulaire délimité par les deux nervures 46 et 48 de telle façon que le doigt 42 soit introduit à l'intérieur de la section angulaire interrompue de la nervure 46.

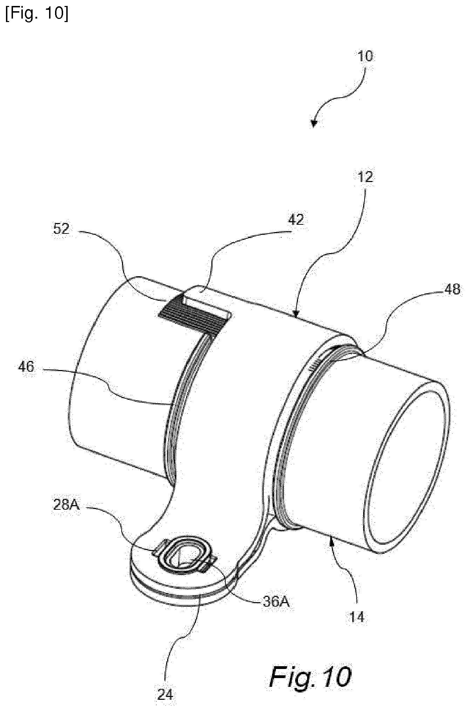

Puis, au cours d'une deuxième étape illustrée par **la** **figure 10****,** les organes de pré-maintien 28A, 28B sont assemblés de telle sorte que le support de fixation 12 soit captif de l'article tubulaire 14 entre les deux nervures 46 et 48. La rotation et la translation du support 12 relativement à l'article tubulaire 14 sont ainsi limitées.

Grâce à l'invention, la rotation autour de l'article tubulaire 14 se fait de façon incrémentale ce qui permet d'ajuster progressivement la position du support 12 par rapport à l'article 14 par crans angulaires successifs et éviter un glissement intempestif du support 12 autour de l'article tubulaire 14 en cours de fonctionnement du véhicule en position serrée.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Support (12) de fixation d'un article tubulaire (14) à un point (16) de montage d'un organe externe (18), comprenant :
- un corps annulaire (20) autour d'un axe (X) de forme générale en « C » comprenant deux extrémités libres (22A, 22B) pouvant être écartées pour positionner le corps annulaire (20) autour de l'article (14), ce corps annulaire (20) comprenant sur une face interne une pluralité de crans (50) de retenue propres à coopérer avec l'articule tubulaire (14) de sorte que le corps annulaire (20) soit adapté pour effectuer une rotation incrémentale d'un cran à l'autre sous l'effet d'une sollicitation mécanique, entre des première et deuxième positions angulaires d'immobilisation provisoire en rotation par les crans de retenue, et
- une patte (24) de fixation au point de montage (16),
**caractérisé en ce que** le support comprend un moyen (40) de limitation du déplacement en rotation relativement à l'articule tubulaire (14) selon une direction circonférentielle à l'intérieur d'une plage de rotation prédéfinie du support (12) autour de l'article (14), le moyen de limitation (40) comprend un doigt (42) s'étendant selon une direction longitudinale à partir du corps annulaire (20) et est configuré pour coopérer entre deux butées (46) ménagées sur l'article tubulaire (14) et espacées angulairement pour définir la plage de rotation prédéfinie **et en ce que** la pluralité de crans (52) s'étend longitudinalement sur au moins une face interne du doigt (42).

2. Support (12) selon la revendication précédente, dans lequel la pluralité de crans (50) s'étend longitudinalement dans une région de la face interne du corps annulaire (20) en forme d'une bande qui s'étend longitudinalement selon la direction axiale (X).

3. Support (12) selon la revendication 1 ou 2, comprenant en outre un moyen de limitation du déplacement en translation du support (12) relativement à l'article tubulaire (14) selon une direction axiale de l'article (14) à l'intérieur d'une plage de translation prédéfinie du support (12) le long de l'article (14).

4. Support (12) selon l'une quelconque des revendications précédentes, dans lequel la pluralité de crans (50) se prolongent longitudinalement sur la face interne du corps annulaire (20) depuis l'extrémité du doigt (42) jusqu'au bord annulaire opposé du corps annulaire (20).

5. Support (12) selon la revendication 3 ou 4, dans lequel le moyen de limitation en rotation et le moyen de limitation du déplacement axial comprennent une lumière ménagée (54) sur le corps annulaire (20) s'étendant selon une direction circonférentielle, configurée pour coopérer avec une nervure saillante (56) de l'article tubulaire (14).

6. Support (12) selon l'une quelconque des revendications précédentes, dans lequel le corps annulaire (20) est élastiquement déformable pour permettre l'écartement des deux extrémités libres (22A, 22B) l'une de l'autre.

7. Support (12) selon l'une quelconque des revendications précédentes, dans lequel le corps annulaire (20) comprend à ses extrémités libres (22A, 22B) des premier (26A) et deuxième (26B) prolongements qui s'étendent à partir du corps annulaire (20) selon une direction latérale extérieure et sont configurés pour former ensemble la patte de fixation (24) par superposition l'un sur l'autre.

8. Support (12) selon la revendication précédente, comprenant des organes de liaison complémentaires de pré-maintien (28, 28A, 28B) qui sont prévus sur chacun desdits prolongements (26A, 26B) et sont configurés pour, qu'à l'état lié, les prolongements (26A, 26B) soient reliés ensemble selon une configuration lâche autorisant la rotation incrémentale du corps annulaire (20) autour de l'article tubulaire (14).

9. Support (12) selon la revendication précédente, dans laquelle les premier (26A) et deuxième (26B) prolongements sont munis chacun d'un trou (36A, 36B), les trous (36A, 36B) étant destinés à venir en vis-à-vis pour former un passage traversant dans la patte de fixation (24) pour la réception d'un élément (38) de serrage des deux prolongements (26A, 26B) sur l'organe externe (18) de telle sorte que le serrage de l'élément (38) provoque le rapprochement mutuel des deux prolongements (26A, 26B) de la configuration lâche provisoire à une configuration serrée définitive en empêchant tout déplacement relatif de l'article (14) et du corps annulaire (20).

10. Support (12) selon la revendication 8 ou 9, dans lequel les organes de pré-maintien (28A, 28B) sont ménagés en retrait d'un bord d'une face interne respectivement des premier (26A) et deuxième (26B) prolongements.

11. Ensemble de fixation (10) comprenant un support de fixation (12) selon l'une quelconque des revendications précédentes et un article tubulaire (14), **caractérisé en ce que** l'article tubulaire (14) comprend un moyen complémentaire (46, 56) de limitation en rotation du support de fixation (12).

12. Ensemble (10) selon la revendication précédente, dans lequel l'article tubulaire (14) comprend un moyen complémentaire (48, 56) de limitation en déplacement longitudinal du support (12) le long de l'article (14).

13. Ensemble (10) selon la revendication précédente, dans lequel l'article tubulaire (14) comprend au moins une première nervure annulaire (46) faisant saillie radialement vers l'extérieur pour limiter la translation longitudinale, et comprend de préférence au moins une deuxième nervure annulaire (48), le support de fixation (12) étant destiné à être guidé en translation entre ces deux nervures (46, 48).

14. Ensemble (10) selon la revendication précédente, dans lequel, le support de fixation (12) étant selon l'une quelconque des revendications précédentes, la première nervure annulaire (46) est interrompue sur un secteur angulaire qui définit la plage de rotation prédéfinie à l'intérieur de laquelle le doigt (42) est déplacé.
